# EUROPÄISCHE PATENTANMELDUNG

(11) **EP 1 219 528 A2**
(43) Veröffentlichungstag der Anmeldung: **03.07.2002**
(21) Anmeldenummer: 01127783.7
(22) Anmeldetag: 22.11.2001
(51) Int. Cl.: B62D 15/02

(54) **Lenkwinkelsensor**

(30) Priorität: 27.12.2000 DE 10065229
(71) Anmelder: Valeo Schalter und Sensoren GmbH, 74321 Bietigheim-Bissingen (DE)
(72) Erfinder: Bauer, Jürgen, 71732 Tamm (DE); Morgenroth, Thorsten, 74357 Bönningheim (DE); Bodenmüller, Werner, 86744 Hainsfarth (DE)
(74) Vertreter: Dreiss, Fuhlendorf, Steimle & Becker

(57) **Zusammenfassung**

Die Erfindung geht aus von einem Lenkwinkelsensor (1) zur Bestimmung des Lenkwinkels eines Fahrzeuges, mit einer wenigstens eine Codespur (5,7) aufweisenden Codescheibe (3), mit wenigstens einer die Codespur (5,7) abtastenden Abtasteinrichtung (11), wobei die Abtasteinrichtung (11) vorzugsweise mehrere auf der einen Seite der Codescheibe (3) angeordnete Sender (23) und vorzugsweise mehrere auf der anderen Seite der Codescheibe (3) angeordnete Empfänger (25) aufweist und wobei die Ausgangssignale der Empfänger (25) ausgewertet werden und daraus der Lenkwinkel bestimmt wird.

Die Erfindung kennzeichnet sich dadurch, dass die Abtasteinrichtung (11) eine Halterung (17) umfasst, die mehrere miteinander montierbare Teile (19,20,21) aufweist, zwischen denen die Sender (23) bzw. Empfänger (25) positionsgenau gehaltert angeordnet sind.

## Beschreibung

Die Erfindung betrifft einen Lenkwinkelsensor zur Bestimmung des Lenkwinkels eines Fahrzeuges, mit einer wenigstens eine Codespur aufweisenden Codescheibe, mit wenigstens einer die Codespur abtastenden Abtasteinrichtung, wobei die Abtasteinrichtung vorzugsweise mehrere auf der einen Seite der Codescheibe angeordnete Sender und vorzugsweise mehrere auf der anderen Seite der Codescheibe angeordnete Empfänger aufweist und wobei die Ausgangssignale der Empfänger ausgewertet werden und daraus der Lenkwinkel bestimmt wird.

Aus der DE 42 43 778 A1 ist ein derartiger Lenkwinkelsensor bekannt geworden. Allerdings geht aus dem genannten Dokument nicht hervor, wie die Sender und die Empfänger montiert und dauerhaft funktionssicher gehaltert werden.

Bei anderen bekannten Lenkwinkelsensoren sind die Sender bzw. Empfänger auf einer Leiterplatte verlötet. Um ein funktionssicheres Arbeiten des Lenkwinkelsensors zu gewährleisten, müssen die Sender und Empfänger in ihrer Lage zueinander sehr genau positioniert sein. Allerdings ist ein derartiges Verlöten und insbesondere ein genaues und damit funktionssicheres Positionieren der Sender sowie der Empfänger sehr aufwendig. Des Weiteren ist eine Abschattung der Empfänger gegenüber anderen Lichtquellen erforderlich, um Störeinflüsse in Form von beispielsweise Streulicht zu unterbinden.

Der vorliegenden Erfindung liegt deshalb die Aufgabe zugrunde, einen Lenkwinkelsensor bereitzustellen, bei welchem sowohl die Sender als auch die Empfänger auf einfache Art und Weise definiert positioniert und dauerhaft funktionssicher gehaltert werden können.

Diese Aufgabe wird bei einem Lenkwinkelsensor der eingangs genannten Art erfindungsgemäß dadurch gelöst, dass die Abtasteinrichtung eine Halterung umfasst, die mehrere miteinander montierbare Teile aufweist, zwischen denen die Sender bzw. Empfänger in ihrer Lage zueiander und bezüglich der Codescheibe positionsgenau gehaltert sind.

Dies hat insbesondere den Vorteil, dass ein Positionieren der einzelnen Sender und Empfänger jeweils in einem Extraarbeitsschritt zur Anordnung auf beispielsweise einer Leiterplatte entfällt. Erfindungsgemäß können die Sender bzw. Empfänger in die Halterung eingesetzt werden. Durch beispielsweise verschiedene Abdeckteile können dann die Sender bzw. Empfänger in ihrer positionsgenauen, zueinander definierten Lage in der Halterung gehaltert werden. Aufgrund der Abdeckung werden insbesondere die Empfänger vor störendem Streulicht von fremden Lichtquellen geschützt. Erst in einem nachfolgenden Arbeitsschritt, nachdem die Positionierung der Empfänger und Sender zueinander fixiert ist, können dann die in der Halterung gehalterten Sender bzw. Empfänger beispielsweise mit einer Leiterplatte verlötet werden.

Bei einer bevorzugten Ausführungsform der Erfindung umfasst die Halterung drei miteinander montierbare Teile, nämlich ein Mittelteil, ein insbesondere auf einer Leiterplatte aufliegendes Trägerteil und ein auf der dem Trägerteil abgewandten Seite des Mittelteils, das Mittelteil abdeckendes Abdeckteil. Die Sender bzw. Empfänger sind hierbei zwischen dem Mittelteil und dem Abdeckteil bzw. zwischen dem Mittelteil und dem Trägerteil positionsgenau angeordnet. Vorteilhafterweise sind die Sender zwischen Abdeckteil und Mittelteil und die Empfänger zwischen Mittelteil und Trägerteil vorhanden.

Erfindungsgemäß ist weiterhin denkbar, dass ein Teil, und insbesondere das Mittelteil, eine Nut aufweist, die von einem Nutgrund und zwei Nutschenkeln gebildet wird, wobei in die Nut ein Abschnitt des die Codespur aufweisenden Bereichs der Codescheibe eingreift und die Sender bzw. Empfänger in den der Codespur zugewandten Bereichen der Nutschenkeln gehaltert sind. Hierdurch wird gewährleistet, dass die Sender bzw. Empfänger so gehaltert werden, dass ein Abtasten der Codespur möglich ist. Aufgrund der die Nut aufweisenden Ausgestaltung der Halterung ist dennoch gewährleistet, dass die einzelnen Sender und Empfänger relativ zueinander positionsgenau fixiert sind.

Bei einer besonders bevorzugten Ausführungsform der Erfindung ist vorgesehen, dass die Halterung und insbesondere das Trägerteil einen Abschnitt zur Anordnung eines Prüfsenders aufweist, der wenigstens einen Empfänger mit einem Prüfsignal beaufschlagt. Ein derartiger Prüfsender hat den Vorteil, dass die Funktionsfähigkeit bzw. die Empfangsfähigkeit der Empfänger während des Betriebs des Lenkwinkelsensors zu jedem beliebigen Zeitpunkt getestet werden kann. Wird nämlich beispielsweise das Sendesignal eines Senders von der Codescheibe abgedeckt, so trifft auf den Empfänger kein Signal. Falls der entsprechende Empfänger defekt ist, registriert er ebenfalls kein Signal. Mit dem Prüfsender kann also auch dann die Funktionsfähigkeit eines Empfängers getestet werden, wenn das Sendesignal des entsprechenden Senders aufgrund der Codescheibe nicht auf den Empfänger trifft.

Vorteilhafterweise ist hierbei vorgesehen, dass die Halterung, und insbesondere das Mittelteil, im Bereich zwischen dem Prüfsender und dem wenigstens einen Empfänger eine Freisparung aufweist, durch die das Prüfsignal von dem Prüfsender zu dem wenigstens einen Empfänger gelangt. Durch derartige definierte Freisparungen wird gewährleistet, dass das Prüfsignal den gewünschten Empfänger erreicht. Weiterhin wird die Erzeugung von Streulicht unterbunden, welche beispielsweise andere, nicht mit dem Prüfsignal beaufschlagte Empfänger irritieren könnte.

Vorteilhafterweise sind Sender sowie Empfänger bedrahtete Bauteile, wobei die Drähte der Sender und Empfänger durch Freisparungen an den einzelnen Teilen der Halterung hindurchgreifen. Die Verwendung von bedrahteten Bauteilen hat den Vorteil, dass die Sender und die Empfänger zunächst in der Halterung positionsgenau zueinander fixiert werden können. Ein Anschluss der Sender und Empfänger beispielsweise an eine zentrale Steuereinheit kann zu einem späteren Zeitpunkt durch Verlöten der entsprechenden Drähte mit entsprechenden Leiterbahnen auf einer Leiterplatte erfolgen.

Dazu ist vorteilhafterweise die Halterung auf einer Leiterplatte angeordnet, wobei die aus der Halterung ragenden Abschnitte der Drähte der Sender und Empfänger mit der Leiterplatte vorteilhafterweise verlötet werden. Alternativ hierzu ist denkbar, die Abtasteinrichtung als Steckerelement auszubilden, welches auf eine Leiterplatte aufgesteckt werden kann.

Zur positionsgenauen und definierten Halterung der Sender und Empfänger weist das Mittelteil vorteilhafterweise an der dem Abdeckteil zugewandten und an der dem Trägerteil zugewandten Seite Aussparungen zur Aufnahme von Sender bzw. Empfänger auf. Dadurch, dass sämtliche Aussparungen an einem Bauteil, nämlich dem Mittelteil, vorhanden sind, wird gewährleistet, dass die Sender bzw. Empfänger mit definiertem, vorgegebenem Abstand zueinander dauerhaft gehaltert werden.

Vorteilhafterweise ist denkbar, dass die Teile der Halterung als separate Teile ausgebildet sind. Alternativ dazu kann vorgesehen sein, dass die einzelnen Teile der Halterung als miteinander, insbesondere über Filmscharniere, verbundene ausgebildete Teile sind. Zur Montage der einzelnen Teile der Halterung sind vorteilhafterweise Schnapp- und/oder Rastverbindungen vorhanden. Dadurch wird eine schnelle Montage der Abtasteinrichtung ermöglicht, ohne dass zusätzliche Werkzeuge benötigt werden.

Weiterhin kann erfindungsgemäß vorteilhafterweise vorgesehen sein, dass die Teile der Halterung und die dazwischen liegenden Sender bzw. Empfänger entlang einer Montagerichtung nacheinander miteinander montierbar sind. Aufgrund einer derartigen Ausbildung ist eine maschinelle Montage einer derartigen Abtasteinrichtung möglich.

Um beispielsweise eine vormontierte Abtasteinrichtung auf einfache Art und Weise auf einer Leiterplatte des Lenkwinkelsensors zu montieren, kann erfindungsgemäß vorgesehen sein, dass das Trägerteil Fixier- und/oder Rastabschnitte aufweist, die mit entsprechenden Abschnitten der Leiterplatte zusammenwirken. Dadurch wird das Trägerteil und damit die Halterung bzw. die Abtasteinrichtung an der Leiterplatte fixiert und gehaltert.

Die eingangs genannte Aufgabe wird außerdem durch eine Abtasteinrichtung sowie eine Halterung eines im Vorhergehenden beschriebenen Lenkwinkelsensors gelöst.

Die eingangs genannte Aufgabe wird auch durch ein Verfahren zur Montage einer im Vorhergehenden beschriebenen Abtasteinrichtung gelöst, das sich durch folgende Verfahrensschritte kannzeichnet:
- Plazieren des Trägerteils auf der Leiterplatte,
- Anordnen des Prüfsenders sowie der bedrahteten Empfänger auf dem Trägerteil, gegebenenfalls Abbiegen der Drähte,
- Aufsetzen des Mittelteils auf das Trägerteil,
- Anordnen der bedrahteten Sender auf dem Mittelteil, gegebenenfalls Abbiegen der Drähte,
- Aufsetzen des Abdeckteils auf das Mittelteil, und
- Verlöten der freien Enden der Drähte an der Leiterplatte.

Die eingangs genannte Aufgabe wird alternativ dazu ebenfalls durch ein Verfahren gelöst, das sich durch folgende Verfahrensschritte auszeichnet:
- Anordnen des Prüfsenders sowie der bedrahteten Empfänger auf dem Trägerteil, gegebenenfalls Abbiegen der Drähte,
- Aufsetzen des Mittelteils auf das Trägerteil,
- Anordnen der bedrahteten Sender auf dem Mittelteil, gegebenenfalls Abbiegen der Drähte,
- Aufsetzen des Abdeckteils auf das Mittelteil,
- Plazieren des Trägerteils auf der Leiterplatte, und
- Verlöten der freien Enden der Drähte an der Leiterplatte.

Durch die beschriebenen Verfahren kann eine sehr einfache und kostengünstige Montage der Abtasteinrichtung gewährleistet werden. Insbesondere in der Großserienfertigung können hierbei enorme Kosten eingespart werden.

Weitere vorteilhafte Ausgestaltungen und Einzelheiten der Erfindung sind der nachfolgenden Beschreibung zu entnehmen, in der die Erfindung anhand der in der Zeichnung dargestellten Ausführungsbeispiele näher beschrieben und erläutert ist.

Es zeigen:
- Fig. 1:: einen erfindungsgemäßen Lenkwinkelsensor in Draufsicht;
- Fig. 2:: eine erfindungsgemäße Abtasteinrichtung des Lenkwinkelsensors gemäß Fig. 1;
- Fig. 3:: die Unteransicht der Halterung der Abtasteinrichtung gemäß Fig. 2;
- Fig. 4, 5 u. 6:: verschiedene Schnitte durch die Halterung gemäß Fig. 3; und
- Fig. 7, 8 u. 9:: verschiedene Ansichten einer zweiten erfindungsgemäßen Halterung für eine Abtasteinrichtung.

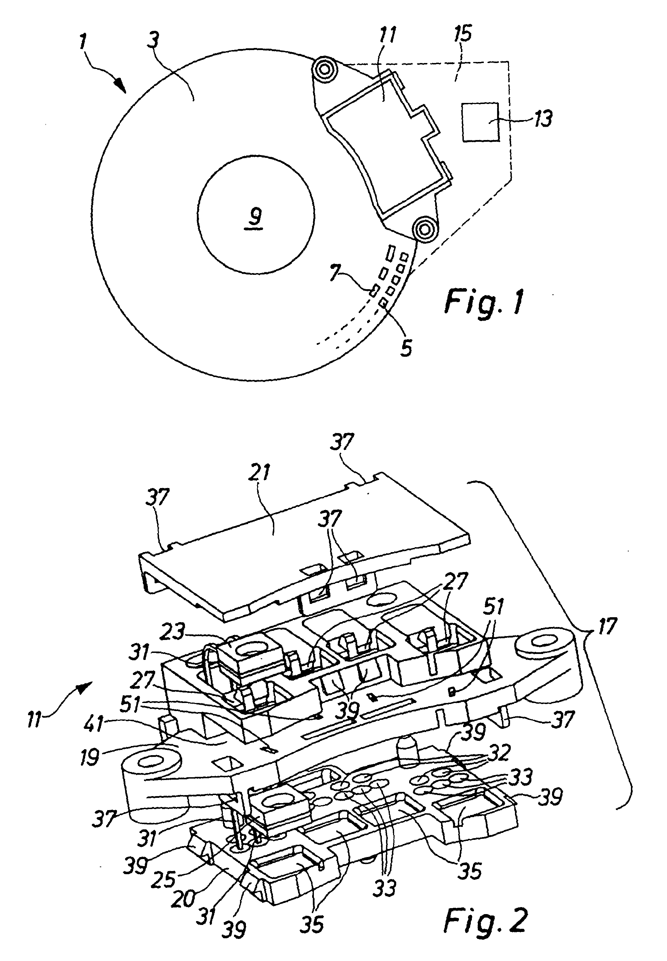

Die Fig. 1 zeigt einen erfindungsgemäßen Lenkwinkelsensor 1 zur Bestimmung des Lenkwinkels eines Fahrzeuges. Der Lenkwinkelsensor 1 weist eine flach ausgebildete Codescheibe 3 auf. Auf der Codescheibe 3 sind zwei auf Kreisbahnen verlaufende Codespuren 5 und 7 angedeutet. Die beiden Codespuren 5 und 7 bestehen hierbei aus definierten, viereckigen in der Codescheibe 3 vorhandenen Durchbrüchen. Die Codescheibe 3 weist in ihrem zentralen Bereich eine kreisförmige Öffnung 9 auf, durch welche in voll montierten Zustand die Lenksäule des Kraftfahrzeuges verläuft. Die Lenksäule kann hierbei drehfest mit der Codescheibe 3 verbunden sein. Damit wird eine Drehung des Lenkrades durch die das Fahrzeug führende Person auf die Codescheibe 3 übertragen.

Die Fig. 1 sieht weiterhin eine Abtasteinrichtung 11 vor, die ortsfest an dem Fahrzeug angeordnet ist. Die Abtasteinheit 11 tastet hierbei die Codespuren 5 und 7 der sich drehenden Codescheibe 3 ab. Die erfassten Werte werden einer Auswerteeinheit 13 zugeführt, welche letztendlich den Lenkwinkel bzw. die Lenkwinkeländerung bestimmt. Die Abtasteinrichtung 11 sowie die Auswerteeinheit 13 sind bei der Ausführungsform gemäß Fig. 1 auf einer Leiterplatte 15 angeordnet. Über in der Fig. 1 nicht dargestellte Leiterbahnen der Leiterplatte 15 werden die von der Abtasteinheit 11 erfassten Signale der Auswerteeinheit 13 zugeführt.

Die Fig. 2 zeigt die Abtasteinrichtung 11 in teilmontiertem, teilweise bestücktem Zustand. Deutlich zu erkennen ist, dass die Abtasteinheit 11 eine mehrteilige Halterung 17 umfasst. Die Halterung 17 gemäß dem Ausführungsbeispiel nach Fig. 2 weist drei miteinander montierbare Teile, nämlich ein Mittelteil 19, ein auf der Leiterplatte 15 gemäß Fig. 1 aufliegendes Trägerteil 20 sowie ein auf der dem Trägerteil 20 abgewandten Seite des Mittelteils 19 liegendes, in montiertem Zustand das Mittelteil 19 abdeckendes Abdeckteil 21 auf.

In der Fig. 2 ist weiterhin ein Sender 23 sowie ein Empfänger 25 dargestellt. Als Sender 23 kommen beispielsweise Leuchtdioden und als Empfänger 25 Transistoren in Betracht.

Wie aus der Fig. 2 deutlich hervorgeht, weist das Mittelteil 19 vier Aussparungen 27 zur Aufnahme von vier Sendern 23 auf. Entsprechend den Aussparungen 27 für die Sender 23 weist die dem Empfänger 25 zugewandte, in Figur 2 nicht zu erkennende, Seite des Mittelteils 19 Aussparungen 29 für die Empfänger 25 auf.

Der Fig. 2 ist weiterhin zu entnehmen, dass sowohl die Sender 23 als auch die Empfänger 25 bedrahtete Bauteile sind. Die Drähte 31 der Sender 23 und der Empfänger 25 durchgreifen sowohl in dem Mittelteil 19 als auch in dem Trägerteil 20 vorhandene Freisparungen in Form von Löchern 32 und 33.

Sowohl das Trägerteil 20 als auch das Abdeckteil 21 weisen auf der dem Mittelteil 19 zugewandten Seite im Bereich der Sender 23 sowie im Bereich der Empfänger 25 Vertiefungen 35 auf, die zur besseren und genaueren Positionierung der Sender 23 bzw. Empfänger 25 dienen.

Zur Montage deer Abtasteinrichtung 11 werden zunächst die Empfänger 25 auf dem Trägerteil 20 angeordnet, wobei deren Drähte 31 entsprechend abgebogen werden, so dass sie durch die entsprechenden Löcher 33 hindurchgreifen. Ein Empfänger weist drei Drähte 31 auf, wobei je Empfänger drei entsprechende Löcher 33 vorhanden sind. In einem nächsten Schritt wird das Mittelteil 19 auf das Trägerteil 20 aufgesetzt. Dann werden die Sender 23 in die dafür vorgesehenen Aussparungen 27 eingesetzt, wobei deren beide Drähte 31 derart abgebogen werden, dass sie durch die entsprechenden, für jeden Sender 23 jeweils zwei vorgesehenen Löcher 32 greifen. Nachdem alle vier Sender 23 eingesetzt worden sind, wird das Abdeckteil 21 auf das Mittelteil 19 aufgesetzt.

In montiertem Zustand sind also die Sender 23 zwischen dem Mittelteil 19 und dem Abdeckteil 21 ortsfest fixiert gehaltert. Außerdem sind die Empfänger 25 zwischen dem Mittelteil 19 und dem Trägerteil 20 ebenfalls entsprechend fixiert positioniert. Dadurch wird eine definierte Lage der Sender 23 und Empfänger 25 zueinander gewährleistet.

Die drei Teile 19, 20 und 21 der Halterung 17 sind gemäß der Ausführungsform nach Fig. 2 als separate Teile ausgebildet. Weiterhin sind sie über in Rastöffnungen 27 schnappende Rastnasen 39 auf einfache Art und Weise montierbar.

Aus Fig. 2 wird deutlich, dass die Teile 19, 20, 21 der Halterung 17 sowie die dazwischen liegenden Sender 23 und Empfänger 25 entlang einer Montagerichtung nacheinander miteinander montierbar sind. Dies hat insbesondere den Vorteil, dass die derart vormontierte Abtastvorrichtung als selbstständig handhabbares Bauteil organisierbar ist.

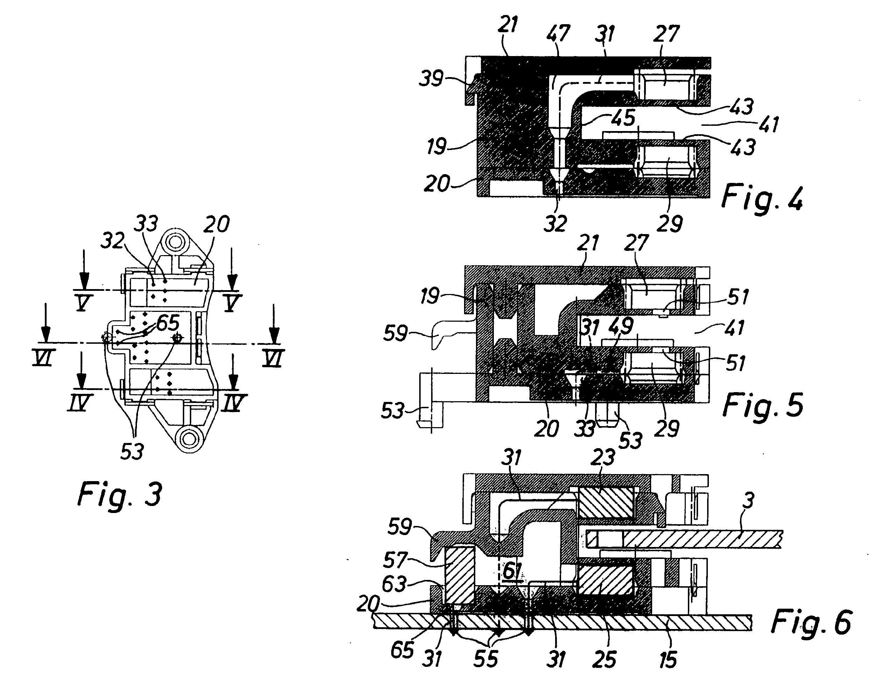

Die Fig. 3 zeigt die Unteransicht des Trägerteils 20 der Halterung 17. Deutlich zu erkennen sind eine Vielzahl von Löchern 32, 33, durch welche in vollständig montiertem Zustand die Drähte 31 der Sender 23 bzw. der Empfänger 25 ragen.

Die den Aussparungen 35 zugewandten Löcher 33 sind hierbei für die Drähte 31 der Empfänger 25 vorgesehen. Die den Aussparungen 35 abgewandten Löcher 32 in dem Trägerteil 20 sind für die Drähte 31 der Empfänger 25 vorgeshen.

In der Fig. 4, die den Schnitt entlang der Linie IV nach Fig. 3 wiedergibt, ist deutlich zu erkennen, dass das Mittelteil 19 eine Nut 41 aufweist. Die Nut 41 wird hierbei von zwei Nutschenkeln 43 sowie einem Nutgrund 45 gebildet. In die Nut 41 greift in vollständig montiertem Zustand des Lenkwinkelsensors 1 die Codescheibe 3 bzw. ein Abschnitt des die Codespur 5, 7 aufweisenden Bereichs der Codescheibe 3 ein. In der Fig. 6 ist die in die Nut 41 eingreifende Codescheibe 3 dargestellt.

Den Fig. 4, 5 und 6 ist weiterhin zu entnehmen, dass die Sender 23 und die Empfänger 25 in den der Codespur 5, 7 zugewandten Bereichen der Nutschenkel 43 gehaltert sind.

Fig. 4 zeigt außerdem ein Loch 32 in dem Trägerteil 20 sowie eine Freisparung 47 in dem Mittelteil 19. Durch die Freisparung 47 verläuft in vollständig montiertem Zustand der gestrichelt angedeutete Draht eines Senders 23, der in der Aussparung 27 gemäß der Fig. 4 angeordnet werden kann.

Die Fig. 5 zeigt einen anderen Schnitt durch die Halterung 11. Dabei ist deutlich zu erkennen, dass der Schnitt gemäß Fig. 5 durch ein Loch 33 geht. Außerdem weist das Mittelteil 19 zwischen der Aussparung 29 und dem in Fig. 5 dargestellten Loch 33 eine Freisparung 49 auf. Durch diese Freisparung 49 kann ein gestrichelt angedeuteter Draht 31 von einem in der Aussparung 29 vorhandenen Empfänger 25 zu dem Loch 33 geführt werden.

Dem Schnitt gemäß der Fig. 5 ist außerdem zu entnehmen, dass das Mittelteil 19 und insbesondere die zwischen der Codescheibe 3 und den Sendern 23 bzw. Empfängern 25 liegenden Bereiche der Nutschenkel 43 Durchbrüche 51 aufweisen, durch die die von den Sendern 23 abgegebenen Signale zu den Empfängern 25 gelangen. Diese Durchbrüche 51 sind ebenfalls der Fig. 2 zu entnehmen.

Die Fig. 5 ist zeigt auch, dass das Trägerteil 20 auf seiner der dem Abdeckteil 21 abgewandten Seite Zentrierund Raststifte 53 aufweist, die zur positionsgenauen Anordnung der Halterung 17 auf der Leiterplatte 15 dienen.

Die Fig. 6 zeigt im Gegensatz zu den Fig. 4 und 5 einen Schnitt, bei welchem Sender 23 und Empfänger 25 in der Halterung 17 vorhanden sind.

Deutlich zu erkennen ist, wie die Drähte 31 der Sender 23 bzw. Empfänger 25 in Freisparungen des Mittelteils 19 liegen. Die Drähte 31 durchgreifen weiterhin die entsprechenden Löcher 32 und 33. Die aus der Halterung 17 herausragenden Abschnitte der Drähte 31 durchgreifen außerdem die Leiterplatte 15. Auf der der Halterung 17 abgewandten Seite der Leiterplatte 15 sind die Drähte 31 mit entsprechenden Leiterbahnen über Lötstellen 55 verlötet.

Die Fig. 6 sieht außerdem einen weiteren Sender, nämlich einen Prüfsender 57, vor. Der Prüfsender 57 ist hierbei in einer definierten Aussparung 63 des Trägerteils 20 angeordnet und wird von einem dafür vorgesehenen Abschnitt 59 des Mittelteils 19 gehaltert. Über eine Freisparung 61 des Mittelteils 19 kann der Empfänger 25 mit von dem Prüfsender 57 ausgehenden Prüfsignalen beaufschlagt werden. Das Trägerteil 20 weist im Bereich des Prüfsenders 57 Löcher 65 auf, durch welche die Drähte 31 des bedrahteten Prüfsenders 57 ragen. Auch diese Drähte 31 durchgreifen die Leiterplatte 15 und sind mit Leiterbahnen verlötet. Alternativ dazu wäre auch denkbar, die Halterung 17 bzw. die Abtasteinrichtung 11 als Steckerelement auszubilden und auf die Leiterplatte 15 aufzustecken.

Mittels des Prüfsenders 57 kann zu jedem Zeitpunkt geprüft werden, ob die Empfänger 25 funktionieren bzw. Signale empfangen. Damit kann gewährleistet werden, dass der erfindungsgemäße Lenkwinkelsensor funktionssicher und korrekt arbeitet.

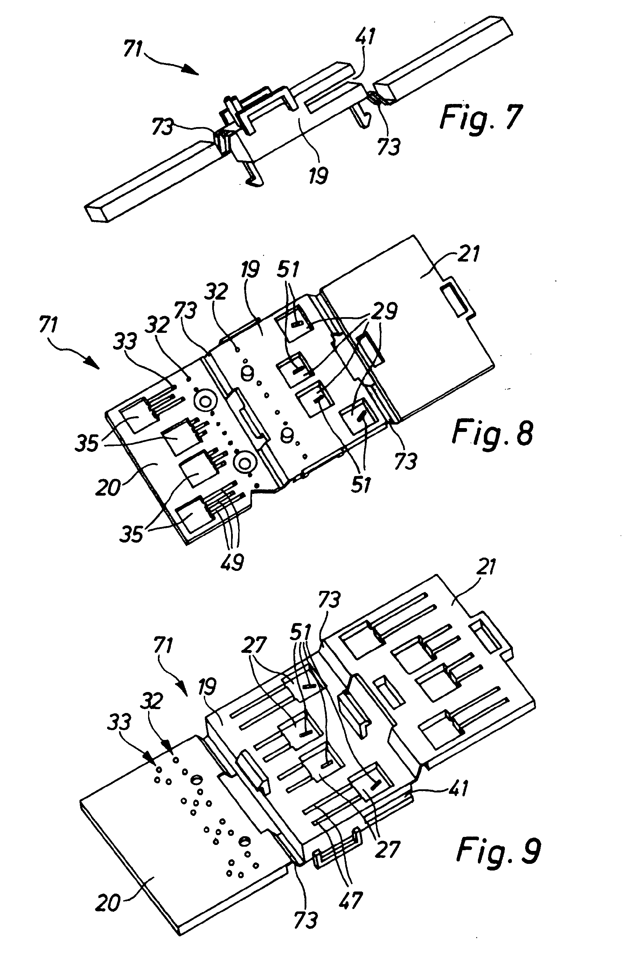

Die Fig. 7, 8 und 9 zeigen eine etwas andere Ausführung einer erfindungsgemäßen Halterung 71. Der wesentliche Unterschied zu der Halterung 17 gemäß den im Vorhergehenden beschriebenen Fig. 1 bis 6 ist, dass die drei Teile 19, 20 und 21 der Halterung 71 über Filmscharniere 73 miteinander verbunden sind. Zur Montage der Halterung 71 werden die Sender 23 bzw. Empfänger 25 in die dafür vorgesehenen Aussparungen 27 und 29 eingesetzt. Danach wird das Trägerteil 20 bzw. das Abdeckteil 21 über die Scharniere 73 in die Endmontagestellung geschwenkt.

Die Halterungen 17 und 71 haben dabei den Vorteil, dass die Sender 23, 57 sowie die Empfänger 25 positionsgenau zueinander fixiert werden. Insbesondere wird ihre Lage zu der Codescheibe 3 bzw. zu den Codespuren 5, 7 definiert. Damit wird vermieden, dass aufgrund von Einbautoleranzen der einzelnen Sender 23 oder Empfänger 25 Funktionsungenauigkeiten des Lenkwinkelsensors 1 auftreten können. Insbesondere kann die Halterung 11 mit den-Sendern 23 und Empfängern 25 maschinell bestückt werden.

Alle in der Beschreibung, den nachfolgenden Ansprüchen und in der Zeichnung dargestellten Merkmale können sowohl einzeln als auch in beliebiger Kombination miteinander erfindungswesentlich sein.

## Patentansprüche

1. Lenkwinkelsensor (1) zur Bestimmung des Lenkwinkels eines Fahrzeuges, mit einer wenigstens eine Codespur (5, 7) aufweisenden Codescheibe (3), mit wenigstens einer die Codespur (5, 7) abtastenden Abtasteinrichtung (11), wobei die Abtasteinrichtung (11) vorzugsweise mehrere auf der einen Seite der Codescheibe (3) angeordnete Sender (23, 57) und vorzugsweise mehrere auf der anderen Seite der Codescheibe (3) angeordnete Empfänger (25) aufweist, und wobei die Ausgangssignale der Empfänger (25) ausgewertet werden und daraus der Lenkwinkel bestimmt wird, **dadurch gekennzeichnet, dass** die Abtasteinrichtung (11) eine Halterung (17, 71) umfasst, die mehrere miteinander montierbare Teile (19, 20, 21) aufweist, zwischen denen die Sender (23, 57) bzw. Empfänger (25) positionsgenau gehaltert angeordnet sind.

2. Lenkwinkelsensor (1) nach Anspruch 1, **dadurch gekennzeichnet, dass** die Halterung (17, 71) drei miteinander montierbare Teile (19, 20, 21) umfasst, nämlich ein Mittelteil (19), ein insbesondere auf einer Leiterplatte (15) aufliegendes Trägerteil (20) und ein auf der dem Trägerteil (20) abgewandten Seite des Mittelteils (19), das Mittelteil (19) abdeckendes Abdeckteil (21), wobei Sender (23, 57) bzw. Empfänger (25) zwischen dem Mittelteil (19) und dem Abdeckteil (21) bzw. zwischen dem Mittelteil (19) und dem Trägerteil (20) angeordnet sind.

3. Lenkwinkelsensor (1) nach Anspruch 1 oder 2, **dadurch gekennzeichnet, dass** ein Teil (19, 20, 21), und insbesondere das Mittelteil (19), eine Nut (41) aufweist, die von einem Nutgrund (45) und zwei Nutschenkeln (43) gebildet wird, wobei in die Nut (41) ein Abschnitt des die Codespur (5, 7) aufweisenden Bereichs der Codescheibe (3) eingreift und die Sender (23, 57) bzw. Empfänger (25) in den der Codespur (5, 7) zugewandten Bereichen der Nutschenkel (43) gehaltert sind.

4. Lenkwinkelsensor (1) nach Anspruch 1, 2 oder 3, **dadurch gekennzeichnet, dass** die Halterung (17, 71), und insbesondere das Trägerteil (20), einen Abschnitt (59) zur Anordnung eines Prüfsenders (57) aufweist, der wenigstens einen Empfänger (25) mit einem Prüfsignal beaufschlagt.

5. Lenkwinkelsensor (1) nach einem der vorhergehenden Ansprüche, **dadurch gekennzeichnet, dass** die Halterung (17, 71), und insbesondere das Mittelteil (19), im Bereich zwischen dem Prüfsender (57) und dem wenigstens einen Empfänger (25) eine Freisparung (61) aufweist, durch die das Prüfsignal von dem Prüfsender (57) zu dem wenigstens einen Empfänger (25) gelangt.

6. Lenkwinkelsensor (1) nach einem der vorhergehenden Ansprüche, **dadurch gekennzeichnet, dass** sowohl Sender (25, 57) als auch Empfänger (25) bedrahtete Bauteile sind, wobei die Drähte (31) der Sender (25, 57) und Empfänger (25) durch Freisparungen (33, 47, 49) an den einzelnen Teilen (19, 20, 21) der Halterung (17, 71) hindurchgreifen.

7. Lenkwinkelsensor (1) nach Anspruch 6, **dadurch gekennzeichnet, dass** die Halterung (17, 71) auf einer Leiterplatte (15) angeordnet ist und dass die aus der Halterung (17,71) ragenden Abschnitte der Drähte (31) der Sender (23, 57) und Empfänger (25) mit der Leiterplatte (15) verbunden, insbesondere verlötet, sind.

8. Lenkwinkelsensor (1) nach einem der vorhergehenden Ansprüche, **dadurch gekennzeichnet, dass** das Mittelteil (19) an der dem Abdeckteil (21) zugewandten und an der dem Trägerteil (20) zugewandten Seite Aussparungen (27, 29) zur Aufnahme von Sender (23) bzw. Empfänger (25) aufweist.

9. Lenkwinkelsensor (1) nach einem der vorhergehenden Ansprüche, **dadurch gekennzeichnet, dass** die Teile (19, 20, 21) der Halterung (17, 71) als separate oder miteinander verbundene, insbesondere über Filmscharniere (73), ausgebildete Teile sind und mittels Schnapp- und/oder Rastverbindungen (37, 39) miteinander montierbar sind.

10. Lenkwinkelsensor (1) nach einem der vorhergehenden Ansprüche, **dadurch gekennzeichnet, dass** die Teile (19, 20, 21) der Halterung (17, 71) und die dazwischen liegenden Sender (23, 57) bzw. Empfänger (25) entlang einer Montagerichtung nacheinander miteinander montierbar sind.

11. Lenkwinkelsensor (1) nach einem der vorhergehenden Ansprüche, **dadurch gekennzeichnet, dass** das Trägerteil (20) Fixier- und/oder Rastabschnitte (53) aufweist, die mit entsprechenden Abschnitten der Leiterplatte (15) zusammenwirken und das Trägerteil (20) und damit die Halterung (17, 71) bzw. die Abtasteinrichtung (11) an der Leiterplatte (15) fixieren und haltern.

12. Abtasteinrichtung (11) eines Lenkwinkelsensors (1) nach wenigstens einem der vorhergehenden Ansprüche.

13. Halterung (17, 71) eines Lenkwinkelsensors (1) bzw. einer Abtasteinrichtung (11) nach wenigstens einem der vorhergehenden Ansprüche.

14. Verfahren zur Montage einer Abtasteinrichtung (11) nach Anspruch 12 auf einer Leiterplatte (15), **gekennzeichnet durch** folgende Verfahrensschritte:
- Plazieren des Trägerteils (20) auf der Leiterplatte (15),
- Anordnen des Prüfsenders (57) sowie der bedrahteten Empfänger (25) auf dem Trägerteil (20), gegebenenfalls Abbiegen der Drähte (31),
- Aufsetzen des Mittelteils (19) auf das Trägerteil (20),
- Anordnen der bedrahteten Sender (25) auf dem Mittelteil (19), gegebenenfalls Abbiegen der Drähte (31),
- Aufsetzen des Abdeckteils (21) auf das Mittelteil (19), und
- Verlöten der freien Enden der Drähte (31) an der Leiterplatte (15).

15. Verfahren zur Montage einer Abtasteinrichtung nach Anspruch 12 auf einer Leiterplatte (15), **gekennzeichnet durch** folgende Verfahrensschritte:
- Anordnen des Prüfsenders (57) sowie der bedrahteten Empfänger (25) auf dem Trägerteil (20), gegebenenfalls Abbiegen der Drähte (31),
- Aufsetzen des Mittelteils (19) auf das Trägerteil (20),
- Anordnen der bedrahteten Sender (23) auf dem Mittelteil (19), gegebenenfalls Abbiegen der Drähte (31),
- Aufsetzen des Abdeckteils (21) auf das Mittelteil (19),
- Plazieren des Trägerteils (20) auf der Leiterplatte (15), und
- Verlöten der freien Enden der Drähte (31) an der Leiterplatte (15).
